# EUROPEAN PATENT APPLICATION

(11) **EP 4 600 142 A1**
(43) Date of publication of application: **13.08.2025**
(21) Application number: 24156956.5
(22) Date of filing: 09.02.2024
(51) Int. Cl.: B64C 3/20, B64C 5/00, B64C 7/00, B64C 9/00

(54) **TRAILING-EDGE UNIT FOR AN AERODYNAMIC MOVABLE AND METHOD FOR MANUFACTURING A TRAILING-EDGE UNIT FOR AN AERODYNAMIC MOVABLE**

(71) Applicant: Airbus Operations GmbH, 21129 Hamburg (DE)
(72) Inventor: Knübel, Mark, Hamburg (DE)

(57) **Abstract**

The invention relates to a trailing-edge unit (1) comprising a first skin element (10) having an inner surface (11) and an outer surface (12) as well as a second skin element (20) having an inner surface (21) and an outer surface (22). It also comprises a core structure (30) arranged between the first and second skin elements (10, 20) and configured to support the first and second skin elements (10, 20). The core structure (30) comprises a first core element (31) having a first sheet material layer (33) and first protrusions (35), wherein the first sheet material layer (33) and the first protrusions (35) are formed as a single-piece structure. The first sheet material layer (33) is connected to the inner surface (11) of the first skin element (10) and the first protrusions (35) extend towards the second skin element (20). The invention also relates to a method for manufacturing a trailing-edge unit (1).

## Description

### Field of the invention

The invention relates to flow influencing systems for aerodynamic structures. In particular, the invention relates to a trailing-edge unit for an aerodynamic movable of an aircraft as well as to a method for manufacturing a trailing-edge unit for an aerodynamic movable of an aircraft.

### Technical Background

Movables like flap components for aircraft are usually exposed to strong aerodynamic loads during operation of the aircraft. For example, flap components are attached at a trailing edge region of an aircraft wing and provide specified cruise and high-lift configurations, wherein the flap components are adapted to be retracted and deployed depending on the current flight condition. Modem high-lift trailing edge systems use flap components which rotate and perform a fowler motion to set up the specified high-lift wing configurations. The flap components are composed of different structural sections. One of these structural sections is the flap trailing-edge section. Usually, this flap trailing-edge section is a metal-metal and sandwich bonded assembly with a honeycomb core. The trailing edge section is manufactured to be water-tight in order to protect the honeycomb core and the adjacent skins. The assembly process requires to extensively prepare each bonding part and involves a complex setup of the assembly including a vacuum foil while working in clean room atmosphere. Furthermore, a bonding process in an autoclave is required which makes the assembly process even more sophisticated.

EP 2 886 451 A1 and US 9,688,385 B2 describe a trailing-edge flap system for a wing of an aircraft which comprises a trailing-edge flap, a guide rail attached to the trailing-edge flap, a carriage slidably engaging the guide rail and rotatably attachable to a fixed position on the wing structure, and a drive means coupled the wing structure to a first joint on the guide rail. The drive means is configured to move the trailing-edge flap relative to the wing structure by moving the guide rail along the carriage by moving the first joint relative to the wing structure, such that the trailing-edge flap translates and rotates. The trailing-edge flap is at least movable into a cruise position, a high-lift position and an air brake position.

### Summary of the invention

It may be seen as an object of the invention to facilitate the manufacturing of an aerodynamic component.

A trailing-edge unit and a method for manufacturing a trailing-edge unit according to the features of the independent claims are provided. Further embodiments of the invention are evident from the dependent claims and from the following description.

According to an aspect of the invention, a trailing-edge unit for an aerodynamic movable of an aircraft is provided. The trailing-edge unit comprises a first skin element having an inner surface and an aerodynamic outer surface, as well as a second skin element having an inner surface and an aerodynamic outer surface. The trailing-edge unit further comprises a core structure arranged between the first skin element and the second skin element, wherein the core structure is configured to support the first skin element and the second skin element. The core structure comprises a first core element having a first sheet material layer and a first plurality of protrusions protruding from a surface of the first sheet material layer. The first sheet material layer and the first plurality of protrusions are formed as a single-piece structure, and the first sheet material layer is connected to the inner surface of the first skin element. The protrusions of the first plurality of protrusions extend towards the second skin element.

The inventive trailing-edge unit may provide a construction that allows a facilitated manufacturing process when compared to conventional manufacturing processes for trailing-edge units. In particular, the inventive trailing-edge unit avoids the manufacturing and integration of a honeycomb core between two metallic skin elements. Rather, the inventive trailing-edge unit includes protrusions integrated into the trailing-edge unit in such a way that the structural loads occurring as a result of the operational loads, e.g., the aerodynamic loads, can still be sufficiently accommodated within the trailing-edge unit, while facilitating the manufacturing process for the trailing-edge unit since, for example, no water-tight sealings or autoclave bonding steps may be required anymore.

The trailing-edge unit may be a part of a trailing-edge movable. In particular, the trailing-edge unit may be a part of a trailing-edge flap. The trailing-edge unit may constitute the part of the trailing-edge movable which is located at a rear section of the trailing-edge movable.

The first skin element and the second skin element may constitute the outer boundaries of the trailing-edge unit so that the core structure is at least partially arranged between the first skin element and the second skin element. The aerodynamic outer surfaces of the skin elements may provide a surface along which an airflow during operation of the trailing-edge unit occurs. For example, the first skin element is an upper skin of the trailing-edge unit and includes the upper aerodynamic outer surface of the trailing-edge unit. The second skin element may be a lower skin of the trailing-edge unit and includes the lower aerodynamic outer surface of the trailing-edge unit. The trailing-edge unit may thus be seen as a flow body, in particular a part of a flow body like an aerodynamic movable.

The core structure is located between the first skin element and the second skin element and may provide a structural support for the first skin element and the second skin element or a connection between the first skin element and the second skin element. In particular, loads acting on the skin elements can be received by the internal core structure. The core structure comprises at least the first core element having a first sheet material layer and a first plurality of protrusions protruding from a surface of the first sheet material layer. As will be explained in more detail below, the core structure may further comprise a second core element having a similar structural appearance as the first core element.

The protrusions of the first plurality of protrusions may be stamped or drawn from the first sheet material layer in a stamping or deep drawing procedure. In particular, the first sheet material layer may comprise a metallic material, for example in the form of a thin aluminum sheet. The protrusions may be referred to as stampings. The protrusions may comprise a pot-like structure, however, may comprise other shapes as well. The protrusions of the first plurality of protrusions may all have the same appearance or shape, but with different sizes. For example, the protrusions of the first plurality of protrusions may be smaller at a rear end of the trailing-edge unit and may be larger at a front end of the trailing-edge unit. As the protrusions of the first plurality of protrusions may be manufactured by a drawing procedure, they may include an internal space so that they form hollow structures. In other words, the protrusions of the first plurality of protrusions may define indentations in the first sheet material layer so that a wall of a respective protrusion defines an inside, e.g., an internal space or hollow, of said protrusion.

As the protrusions of the first plurality of protrusions may be drawn from the first sheet material layer, the protrusions may be formed from the first sheet material layer such that the first sheet material layer and the protrusions provide an integral structure, i.e., a single-piece structure. The sheet material layer may comprise a first side on which the protrusions are located and a second opposite side in which the above-mentioned indentations are provided. The second side of the first sheet material layer is connected to the inner surface of the first skin element so that the protrusions of the first plurality of protrusions can extend towards the second skin element.

According to an embodiment, the core structure comprises a second core element having a second sheet material layer and a second plurality of protrusions protruding from a surface of the second sheet material layer, wherein the second sheet material layer is connected to the inner surface of the second skin element and wherein the protrusions of the second plurality of protrusions extend towards the first skin element.

The protrusions of the second plurality of protrusions may be manufactured identically or at least similarly to the protrusions of the second plurality of protrusions. In particular, the protrusions of the second plurality of protrusions may be stamped or drawn from the second sheet material layer in a stamping or deep drawing procedure. In particular, the second sheet material layer may comprise a metallic material, for example in the form of a thin aluminum sheet. The protrusions may be referred to as stampings. The protrusions may comprise a pot-like structure, however, may comprise other shapes as well. The protrusions of the second plurality of protrusions may all have the same appearance or shape, but with different sizes. For example, the protrusions of the second plurality of protrusions may be smaller at a rear end of the trailing-edge unit and may be larger at a front end of the trailing-edge unit. As the protrusions of the second plurality of protrusions may be manufactured by a drawing procedure, they may include an internal space so that they form hollow structures. In other words, the protrusions of the second plurality of protrusions may define indentations in the second sheet material layer so that a wall of a respective protrusion defines an inside, e.g., an internal space or hollow, of said protrusion.

As the protrusions of the second plurality of protrusions may be drawn from the second sheet material layer, the protrusions may be formed from the second sheet material layer such that the second sheet material layer and the protrusions provide an integral structure, i.e., a single-piece structure. The second sheet material layer may comprise a first side on which the protrusions are located and a second opposite side in which the above-mentioned indentations are provided. The second side of the second sheet material layer is connected to the inner surface of the second skin element so that the protrusions of the second plurality of protrusions can extend towards the first skin element.

According to an embodiment, a protrusion of the first plurality of protrusions abuts against a respective protrusion of the second plurality of protrusions.

Preferably, several protrusions of the first plurality of protrusions abut against respective protrusions of the second plurality of protrusions. In particular, each protrusion of the first plurality of protrusions has a base end which forms the transition to the first sheet material layer and a top end which extends into the space between the first and second skin elements, i.e., towards the second skin element. Analogously, each protrusion of the second plurality of protrusions has a base end which forms the transition to the second sheet material layer and a top end which extends into the space between the first and second skin elements, i.e., towards the first skin element. The top ends of at least some of the first plurality of protrusions may abut against, e.g., contact, respective top ends of at least some of the second plurality of protrusions, respectively. In an example, one protrusion of the first plurality of protrusions may abut against a respective protrusion of the second plurality of protrusions. This may apply for several pairs of protrusions.

According to an embodiment, a protrusion of the first plurality of protrusions is connected to a respective protrusion of the second plurality of protrusions using a connecting means.

For example, the connecting means may connect the protrusions at their respective top ends, i.e., where the protrusions of the first and second plurality of protrusions abut against each other. In an example, each protrusion of the first plurality of protrusions may be connected to a respective protrusion of the second plurality of protrusions.

According to an embodiment, the connecting means comprises at least one of a screw connection, a rivet connection, an adhesive connection or a weld connection.

The connecting means may connect the top ends of the protrusions being arranged opposite to each other.

According to an embodiment, the trailing-edge unit further comprises a spacer element that is arranged at a top end of a protrusion of the first plurality of protrusions.

Accordingly, the spacer element may also be arranged at a top end of a protrusion of the second plurality of protrusions so that the spacer element may be arranged between two oppositely arranged protrusions, i.e., between the top ends of the oppositely arranged protrusions.

According to an embodiment, at least one protrusion of the first plurality of protrusions abuts against the inner surface of the second skin element.

For example, if the distance between the first skin element and the second skin element becomes very low, e.g., at a tapered rear end of the trailing-edge unit, it may not be required to provide two oppositely arranged protrusions abutting against each other. Rather, in this case it may be sufficient to have the protrusions only on one side, i.e., either first protrusions extending towards the second skin element or second protrusions extending towards the first skin element.

According to an embodiment, the protrusions of the first plurality of protrusions are provided by a deep drawing procedure.

As explained above, the protrusions of the first plurality of protrusions may be formed by deep drawing of the first sheet material layer. Analogously, the protrusions of the second plurality of protrusions are also provided by a deep drawing procedure. As explained above, the protrusions of the second plurality of protrusions may be formed by deep drawing of the second sheet material layer.

According to an embodiment, the first skin element comprises an opening extending through the first skin element and providing a connection between an inside of a protrusion, e.g., an inner space of a protrusion, of the first plurality of protrusions and an outside of the trailing-edge unit.

Alternatively or additionally, the second skin element also comprises an opening extending through the second skin element and providing a connection between an inside of a protrusion, e.g., an inner space of a protrusion, of the second plurality of protrusions and an outside of the trailing-edge unit. If the first skin element is an upper skin element of the trailing-edge unit and the second skin element is a lower skin element of the trailing-edge unit, an opening may preferably or only be provided at the second (lower) skin element. It is possible that there is one opening provided for each protrusion of the first and/or second plurality of protrusions such that the inner spaces of the respective protrusions are fluidly connected to the outside of the trailing-edge unit, for example for drainage purposes.

According to an embodiment, the first sheet material layer comprises at least one cavity.

Alternatively or additionally, the second sheet material layer may also comprise at least one cavity. The cavity of the first and/or second sheet material layer may be a recess or an opening in the sheet material layer. The cavity may include any shape, for example a bore, a hole, an elongated hole or the like. Preferably, several cavities may be provided in the first sheet material layer and/or the second sheet material layer. The cavities may reduce the weight of the sheet material layers. They may be arranged in a repetitive pattern in the sheet material layers, for example between the protrusions.

According to an embodiment, the first plurality of protrusions includes protrusions having different heights with which the protrusions protrude from the surface of the first sheet material layer.

For example, the height of the protrusions of the first plurality of protrusions may increase with the distance from a rear end of the trailing-edge unit. In particular, the protrusions of a row of protrusions located near the rear end of the trailing-edge unit may be lower in height than protrusions of a row of protrusions located near a front end of the trailing-edge unit.

According to an embodiment, the second plurality of protrusions includes protrusions having different heights with which the protrusions protrude from the surface of the second sheet material layer.

For example, the height of the protrusions of the second plurality of protrusions may increase with the distance from a rear end of the trailing-edge unit. In particular, the protrusions of a row of protrusions located near the rear end of the trailing-edge unit may be lower in height than protrusions of a row of protrusions located near a front end of the trailing-edge unit.

According to an aspect, an aircraft comprising a trailing-edge unit as described herein is provided. The aircraft may be a transport or passenger aircraft.

According to another aspect, a use of the trailing-edge unit described herein as part of a trailing-edge flap device is provided.

According to another aspect, a method for manufacturing a trailing-edge unit for an aerodynamic movable of an aircraft is provided. In a step of the method, a first skin element having an inner surface and an aerodynamic outer surface is provided. In another step, a second skin element having an inner surface and an aerodynamic outer surface is provided. In another step, a core structure comprising a first core element with a first sheet material layer and a first plurality of protrusions protruding from a surface of the first sheet material layer is provided, wherein the first sheet material layer and the first plurality of protrusions are formed as a single-piece structure. In another step, the first sheet material layer is connected to the inner surface of the first skin element. In another step, the second skin element is coupled via the first plurality of protrusions to the first skin element.

The steps of the inventive method may be performed in the indicated order. However, another order may be possible.

### Brief description of the drawings

The present invention will hereinafter be described in conjunction with the following drawing figures, wherein like numerals denote like elements, and wherein:
- Fig. 1: shows a side view of a trailing-edge unit.
- Fig. 2: shows a perspective view of the trailing-edge unit of Fig. 1.
- Fig. 3: shows a perspective view of a first or second core element of the trailing-edge unit of Fig. 1.
- Fig. 4: shows an exploded view of the trailing-edge unit of Fig. 1.
- Fig. 5: shows a top view of the trailing-edge unit of Fig. 1.
- Fig. 6: shows a cross-sectional view of a part of the trailing-edge unit of Fig. 1.
- Fig. 7: shows a detailed view of a contact area between two protrusions of the trailing-edge unit of Fig. 1.
- Fig. 8: shows an aircraft comprising the trailing-edge unit of Fig. 1.
- Fig. 9: shows a flow diagram of a method for manufacturing a trailing-edge unit.

### Detailed description of exemplary embodiments

The representations and illustrations in the drawings are schematic and not to scale. A better understanding of the trailing-edge unit and the method described above may be obtained through a review of the illustrations accompanying this application together with a review of the detailed description that follows.

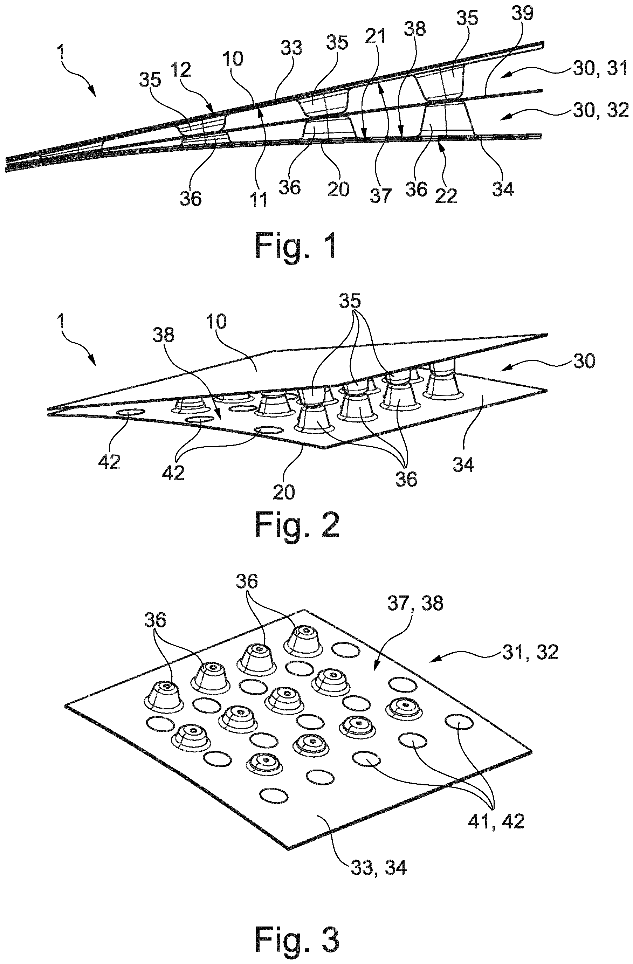

Fig. 1 shows a side view of a trailing-edge unit 1. The trailing-edge unit 1 may be part of an aerodynamic movable, for example part of a flap device of an aircraft wing. The trailing-edge unit 1 comprises a first skin element 10 having an inner surface 11 and an aerodynamic outer surface 12. The trailing-edge unit 1 further comprises a second skin element 20 having an inner surface 21 and an aerodynamic outer surface 22. The trailing-edge unit 1 further comprises a core structure 30 arranged between the first skin element 10 and the second skin element 20, the core structure 30 being configured to support and/or connect the first skin element 10 and the second skin element 20.

The core structure 30 comprises a first core element 31 having a first sheet material layer 33 and a first plurality of protrusions 35 protruding from a surface 37 of the first sheet material layer 33. The first sheet material layer 33 and the first plurality of protrusions 35 are formed as a single-piece structure. In particular, the protrusions 35 of the first plurality of protrusions 35 are formed by a deep drawing technique applied onto the first sheet material layer 33. The first sheet material layer 33 is connected to the inner surface 11 of the first skin element 10, for example via a riveted, screwed, welded or adhesive connection, and the protrusions 35 of the first plurality of protrusions 35 extend towards the second skin element 20.

The core structure 30 also comprises a second core element 32 having a second sheet material layer 34 and a second plurality of protrusions 36 protruding from a surface 38 of the second sheet material layer 34. In particular, the protrusions 36 of the second plurality of protrusions 36 are formed by a deep drawing technique applied onto the second sheet material layer 34. The second sheet material layer 34 is connected to the inner surface 21 of the second skin element 20, for example via a riveted, screwed, welded or adhesive connection, and the protrusions 36 of the second plurality of protrusions 36 extend towards the first skin element 10.

The first skin element 10 may be an upper skin element of the trailing-edge unit 1 and the second skin element 20 may be a lower skin element of the trailing-edge unit 1. The protrusions 35 of the first plurality of protrusions 35 abut against respective protrusions 36 of the second plurality of protrusions 36. In the example of Fig. 1, three protrusions 35 are shown, each of which abuts against one oppositely arranged protrusion 36. The protrusions 35, 36 abut against each other at their top ends. This configuration provides the required structural strength of the trailing-edge unit 1. Fig. 1 also shows a virtual plane 39 which designates the contact areas between the oppositely arranged protrusions 35, 36. It is noted that said plane 39 may be no additional structural part but may be used to visualize the contact areas between the oppositely arranged protrusions 35, 36. As can be seen, the virtual plane 39 is slightly curved indicating that the location of the contact areas between the oppositely arranged protrusions 35, 36 basically follows curvature of the skin elements 10, 20. In particular, a protrusion 35 and an oppositely arranged protrusion 36 may have substantially the same height. This may apply to all protrusions 35, 36 such that the virtual plane 39 is arranged substantially halfway between the skin elements 10, 20.

Thus, the first plurality of protrusions 35 includes protrusions 35 having different heights with which the protrusions 35 protrude away from the surface 37 of the first sheet material layer 33. In particular, the height of the protrusions 35 increases with the distance from the rear end that is located on the left-hand side of the trailing edge-unit 1 in Fig. 1. Furthermore, the second plurality of protrusions 36 includes protrusions 36 having different heights with which the protrusions 36 protrude away from the surface 38 of the second sheet material layer 34. In particular, the height of the protrusions 36 increases with the distance from the rear end that is located on the left-hand side of the trailing edge-unit 1 in Fig. 1.

It is possible, that there are one or more protrusions which do not have an oppositely arranged protrusion. One exemplary protrusion is shown in Fig. 1 near the rear end on the left-hand side of the trailing edge-unit 1.

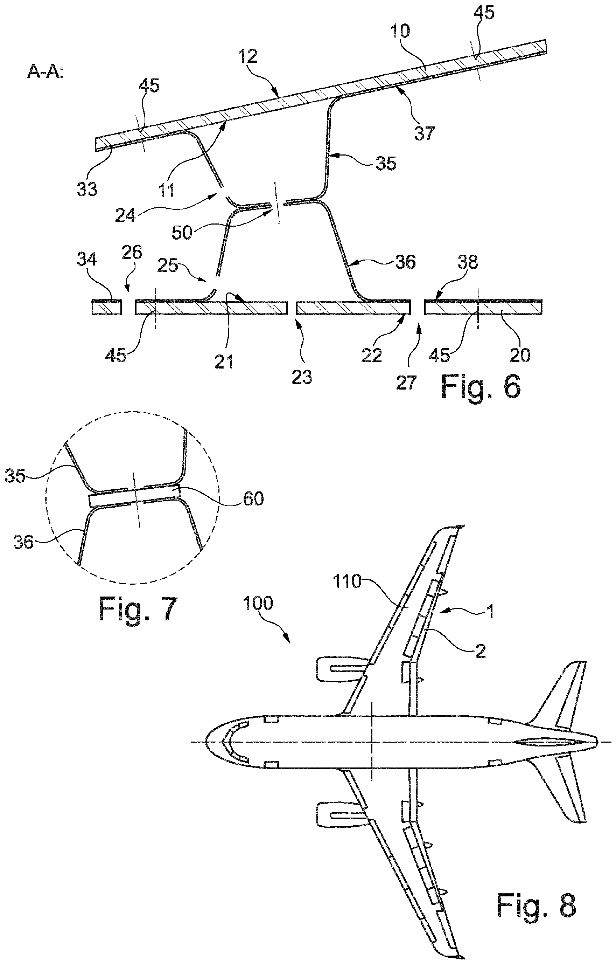

Instead of using a honeycomb core, the inventive trailing-edge unit 1 may include two metal sheets 33, 34 which act as form giving and load transferring members. Both metal sheets have formed protrusions 35, 36, e.g., so-called stampings, protruding in opposite directions up to an intermediate interface surface, i.e., the virtual plane 39. Each protrusion 35, 36 may be provided with a center hole at the top for a part-to-part assembly using permanent fasteners as will be explained in more detail with respect to Fig. 6. The aerodynamic loft gets thinner at the rear end of the trailing-edge unit 1. As indicated above, only one sheet material layer, e.g., the first sheet material layer 33, may be drawn or stamped at the location of the last row of protrusions 35, while no associated protrusions 36 are drawn or stamped from the second sheet material layer 34 at this location. Countersunk fastener heads shall be used at this last row to couple the protrusions 35 to the second skin element 20.

A rib element and/or a spar element may be integrated into the trailing edge unit 1. For example, the rib elements and/or spar elements may form a box in which the protrusions are located. These rib elements and/or spar elements are not further shown in the Figures.

Fig. 2 shows a perspective view of the trailing-edge unit of Fig. 1. The perspective view shows the trailing edge-unit 1 slightly from an upper perspective such that it is visible how the protrusions 36 of the second plurality of protrusions 36 extend from second sheet material layer 34. In addition, cavities 42 being formed within the second sheet material layer 34 can be recognized. These cavities 42 may be in the form of through holes or recesses, thereby reducing the weight of the second sheet material layer 34. The first sheet material layer 33 (cf. Fig. 1) is not shown in Fig. 2, but may also include cavities. Due to the viewing perspective, only the protrusions 35 extending from the first sheet material layer 33 may be recognized from Fig. 2. The skin elements 10, 20 enclose the core structure 30 in order to form the trailing-edge unit 1.

Fig. 3 shows a perspective view of the first core element 31 or the second core element 32 of the trailing-edge unit of Fig. 1. In particular, the first core element 31 or the second core element 32 may have an identical or at least a similar appearance. From Fig. 3, the different heights with which the protrusions 35, 36 of the first or second plurality of protrusions 35, 36 extend from the first or second sheet material layer 33, 34, respectively, are visible. Furthermore, the arrangement of the cavities 41 in the first sheet material layer 33 or in the second sheet material layer 34 are shown. The protrusions 35 and the cavities 41 may be arranged at the first sheet material layer 33 in an alternating pattern. Analogously, the protrusions 36 and the cavities 42 may be arranged at the second sheet material layer 34 in an alternating pattern. The cavities 41, 42 may represent so-called weight reducing holes and may be used to reduce material where it is actually not needed and thus reduce weight of the core elements 31, 32.

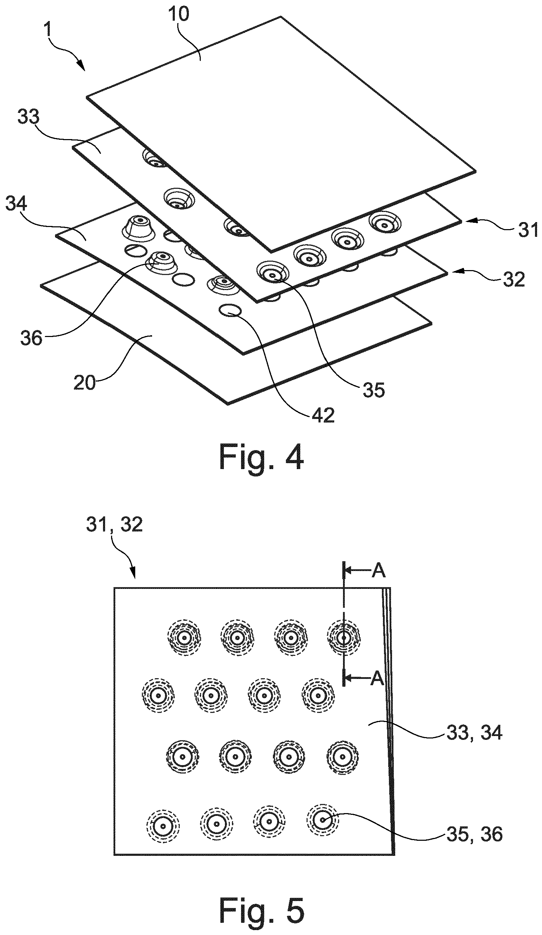

Fig. 4 shows an exploded view of the trailing-edge unit of Fig. 1. From this upper perspective view, the protrusions 35 of the first plurality of protrusions 35 are viewed from the outer side of the first sheet material layer 33 such that the protrusions 35 appear in the form of indentations. These indentations are the result of the protrusions 35 being formed by a deep drawing procedure as explained above. The protrusions 36 of the second plurality of protrusions 36 are viewed from the inner side of the second sheet material layer 34 such that the protrusions 36 appear in the form of protrusions.

With respect to the remaining components shown in Fig. 4, reference is made to the previous Figures 1 to 3.

Fig. 5 shows a top view onto the first core element 31 or the second core element 32, i.e., onto the first sheet material layer 33 or the second sheet material layer 34, of the trailing-edge unit 1 of Fig. 1. In this Figure, the circular shape of the protrusions 35 or 36 is visible. It is noted that the protrusions 35 or 36 may comprise other shapes as well.

Fig. 6 shows a cross-sectional view of a part of the trailing-edge unit 1 of Fig. 1. In particular, Fig. 6 shows the cross-section A-A of Fig. 5. This cross-section A-A represents a cross-section through one protrusion 35 of the first plurality of protrusions 35 and an oppositely arranged protrusion 36 of the second plurality of protrusions 36. As can be seen, the first sheet material layer 33 is directly attached to the inner surface 11 of the first skin element 10, for example via a rivet or screw connection 45. The protrusion 35 extends from the inner surface 37 of the first sheet material layer 33 towards the second skin element 20. Similarly, the second sheet material layer 34 is directly attached to the inner surface 21 of the second skin element 20, for example via a rivet or screw connection 45. The protrusion 36 extends from the inner surface 38 of the second sheet material layer 34 towards the first skin element 10.

The top end of the protrusion 35 of the first plurality of protrusions 35 and the top end of the protrusion 36 of the second plurality of protrusions 36 contact each other. In other words, the protrusions 35, 36 abut against each other. In this contact area or abutting area, both protrusions 35, 36 may be attached to one another via a connecting means 50. The connecting means 50 comprises at least one of a screw connection, a rivet connection, an adhesive connection or a weld connection.

The second skin element 20 comprises an opening 23 extending through the second skin element 20 and providing a connection between an inside of the protrusion 36 of the second plurality of protrusions 36 and an outside of the trailing-edge unit 1, for example to an environment in which the trailing-edge unit 1 is operated. The opening 23 may for instance fluidly connect an internal space formed by the protrusion 36 and the outside of the trailing-edge unit 1. For example, each protrusion 36 can have at least one respective opening 23 for drainage. However, it may be preferred that only some of the protrusions 36 can have a respective opening 23 for drainage. In an example, the complete trailing-edge unit 1 may have holes or openings 23 in the second skin element 20, for drainage at regular intervals and as needed. The drainage openings 23 at the second skin element 20 may be used for endoscope examination or additional openings 23 may be inserted for endoscope examination. The aerodynamic outer surface 12 of the first skin element 10 may also have such openings.

In addition, the protrusions 35, 36 may each have a further opening 24, 25 via which the inner spaces of the protrusions 35, 36 are connected to an inner space of the trailing edge unit 1. In particular, the inner space of the protrusion 35 is connected via the opening 24 to the inner space of the trailing edge unit 1 outside the protrusions, i.e., to the inner space of the core structure 30 between the first skin element 10 and the second skin element 20. Accordingly, the inner space of the protrusion 36 is connected via the opening 25 to the inner space of the trailing edge unit 1 outside the protrusions, i.e., to the inner space of the core structure 30 between the first skin element 10 and the second skin element 20. These openings 24, 25 may provide a fluid communication for draining liquid, e.g., water, occurring due to pressure and temperature effects.

Furthermore, the inner space of the trailing edge unit 1 outside the protrusions 35, 36 may be connected via the openings 26, 27 to the outside of the trailing edge unit 1. In particular, the inner space of the core structure 30 between the first skin element 10 and the second skin element 20 may be connected to an environment in which the trailing edge unit 1 is operated. These openings 26, 27 may be provided in the second skin element 20 in any number and may be provided for drainage and/or inspection purposes.

The aerodynamic outer surface 12 of the first skin element 10 and the aerodynamic outer surface 22 of the second skin element 20 may together form the aerodynamic outer contour of the trailing edge unit 1. In particular, these surfaces 12, 22 may represent the surfaces along which an airflow may occur during operation of the trailing edge unit 1.

Fig. 7 shows a detailed view of a contact area between two protrusions 35, 36 of the trailing-edge unit 1 of Fig. 1. A spacer element 60 may be provided between the protrusion 35 of the first plurality of protrusions 35 and the protrusion 36 of the second plurality of protrusions 36. In particular, the spacer element 60 is arranged between a top end of the protrusion 35 of the first plurality of protrusions 35 and a top end of the protrusion 36 of the second plurality of protrusions 36. In other words, if the protrusions 35, 36 cannot be formed deep enough to meet the virtual plane 39 (cf. Fig. 1), the gap between both protrusions 35, 36 can be closed by using spacers. Also shims can be used for this purpose.

Fig. 8 shows an aircraft 100 comprising the trailing-edge unit 1 of Fig. 1. For example, the trailing-edge unit 1 may be a part of an aerodynamic movable 2, in particular of a flap device 2, of the aircraft 100. The flap device 2 may be movably coupled to an aircraft wing 110. In an example, the trailing-edge unit 1 may represent a trailing-edge part of the flap device 2.

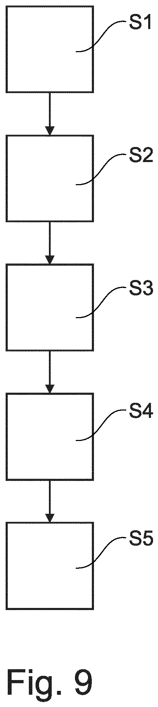

Fig. 9 shows a flow diagram of a method for manufacturing a trailing-edge unit. For example, Fig. 9 shows a flow diagram of a method for manufacturing the trailing-edge unit 1 as described with reference to Figures 1 to 8 above. A step S1 of the method includes providing a first skin element 10 having an inner surface 11 and an aerodynamic outer surface 21. A step S2 includes providing a second skin element 20 having an inner surface 21 and an aerodynamic outer surface 22. A step S3 includes providing core structure 30 comprising a first core element 31 with a first sheet material layer 33 and a first plurality of protrusions 35 protruding from a surface 37 of the first sheet material layer 33, wherein the first sheet material layer 33 and the first plurality of protrusions 35 are formed as a single-piece structure. A step S4 includes connecting the first sheet material layer 33 to the inner surface 11 of the first skin element 10. A step S5 includes coupling the second skin element 20 via the first plurality of protrusions 35 to the first skin element 10. For example, step S5 may further include coupling the second skin element 20 via the first plurality of protrusions 35 and via a second plurality of protrusions 36 of a second sheet material layer 34 to the first skin element 10.

## Claims

1. A trailing-edge unit (1) for an aerodynamic movable (2) of an aircraft (100), comprising:
a first skin element (10) having an inner surface (11) and an aerodynamic outer surface (12);
a second skin element (20) having an inner surface (21) and an aerodynamic outer surface (22);
a core structure (30) arranged between the first skin element (10) and the second skin element (20);
wherein the core structure (30) is configured to support the first skin element (10) and the second skin element (20);
wherein the core structure (30) comprises a first core element (31) having a first sheet material layer (33) and a first plurality of protrusions (35) protruding from a surface (37) of the first sheet material layer (33);
wherein the first sheet material layer (33) and the first plurality of protrusions (35) are formed as a single-piece structure;
wherein the first sheet material layer (33) is connected to the inner surface (11) of the first skin element (10); and
wherein the protrusions (35) of the first plurality of protrusions (35) extend towards the second skin element (20).

2. The trailing-edge unit (1) of claim 1,
wherein the core structure (30) comprises a second core element (32) having a second sheet material layer (34) and a second plurality of protrusions (36) protruding from a surface (38) of the second sheet material layer (34);
wherein the second sheet material layer (34) is connected to the inner surface (21) of the second skin element (20); and
wherein the protrusions (36) of the second plurality of protrusions (36) extend towards the first skin element (10).

3. The trailing-edge unit (1) according to claim 2,
wherein a protrusion (35) of the first plurality of protrusions (35) abuts against a respective protrusion (36) of the second plurality of protrusions (36).

4. The trailing-edge unit (1) according to any one of claims 2 or 3,
wherein a protrusion (35) of the first plurality of protrusions (35) is connected to a respective protrusion (36) of the second plurality of protrusions (36) using a connecting means (50).

5. The trailing-edge unit (1) according to claim 4,
wherein the connecting means (50) comprises at least one of a screw connection, a rivet connection, an adhesive connection or a weld connection.

6. The trailing-edge unit (1) according to any one of the preceding claims, comprising:
a spacer element (60);
wherein the spacer element (60) is arranged at a top end of a protrusion (35) of the first plurality of protrusions (35).

7. The trailing-edge unit (1) according to any one of the preceding claims,
wherein at least one protrusion (35) of the first plurality of protrusions (35) abuts against the inner surface (21) of the second skin element (20).

8. The trailing-edge unit (1) according to any one of the preceding claims,
wherein the protrusions (35) of the first plurality of protrusions (35) are provided by a deep drawing procedure.

9. The trailing-edge unit (1) according to any one of the preceding claims,
wherein the first skin element (10) comprises an opening extending through the first skin element (10) and providing a connection between an inside of a protrusion (35) of the first plurality of protrusions (35) and an outside of the trailing-edge unit (1).

10. The trailing-edge unit (1) according to any one of the preceding claims,
wherein the first sheet material layer (33) comprises at least one cavity (41).

11. The trailing-edge unit (1) according to any one of the preceding claims,
wherein the first plurality of protrusions (35) includes protrusions (35) having different heights with which the protrusions (35) protrude from the surface (37) of the first sheet material layer (33).

12. The trailing-edge unit (1) according to any one of claims 2 to 5,
wherein the second plurality of protrusions (36) includes protrusions (36) having different heights with which the protrusions (36) protrude from the surface (38) of the second sheet material layer (34).

13. An aircraft (100) comprising a trailing-edge unit (1) according to any one of the preceding claims.

14. Use of a trailing-edge unit (1) according to any one of claims 1 to 12 as part of a trailing-edge flap device (2).

15. Method for manufacturing a trailing-edge unit (1) for an aerodynamic movable (2) of an aircraft (100), comprising:
providing a first skin element (10) having an inner surface (11) and an aerodynamic outer surface (21, S1);
providing a second skin element (20) having an inner surface (21) and an aerodynamic outer surface (22, S2);
providing core structure (30) comprising a first core element (31) with a first sheet material layer (33) and a first plurality of protrusions (35) protruding from a surface (37) of the first sheet material layer (33), wherein the first sheet material layer (33) and the first plurality of protrusions (35) are formed as a single-piece structure (S3);
connecting the first sheet material layer (33) to the inner surface (11) of the first skin element (10, S4);
coupling the second skin element (20) via the first plurality of protrusions (35) to the first skin element (10, S5).
